Europäisches Patentamt

European Patent Office

Office européen des brevets

(19)

(11) Veröffentlichungsnummer: **0 157 269**
**B1**

(12) # EUROPÄISCHE PATENTSCHRIFT

(45) Veröffentlichungstag der Patentschrift:
12.08.87

(51) Int. Cl.⁴: **G 03 G 9/12, C 08 F 8/34**

(21) Anmeldenummer: **85103101.3**

(22) Anmeldetag: **18.03.85**

(54) Elektrostatographischer Suspensionsentwickler.

(30) Priorität: **31.03.84 DE 3412085**

(43) Veröffentlichungstag der Anmeldung:
**09.10.85 Patentblatt 85/41**

(45) Bekanntmachung des Hinweises auf die Patenterteilung:
**12.08.87 Patentblatt 87/33**

(84) Benannte Vertragsstaaten:
**BE DE FR GB**

(56) Entgegenhaltungen:
**DE-A-1 572 335**
**DE-A-2 452 499**

(73) Patentinhaber: **Agfa- Gevaert AG, Patentabteilung,
D-5090 Leverkusen 1 (DE)**

(72) Erfinder: **Podszun, Wolfgang, Dr., Wolfskaul 4,
D-5000 Köln 80 (DE)**
Erfinder: **Witte, Josef, Dr., Haferkamp 10, D-5000
Köln 80 (DE)**
Erfinder: **Uytterhoeven, Hermann, Dr., Boslaan Nr.
6, B-2820 Bonheiden (BE)**
Erfinder: **Goossens, John, Roggendorfstrasse 51,
D-5000 Köln 80 (DE)**

EP 0 157 269 B1

## Beschreibung

Die Erfindung betrifft einen verbesserten elektrostatographischen Suspensionsentwickler, der ein Blockcopolymerisat enthält.

Zum Entwickeln von elektrostatischen Bildern auf elektrostatographischen Aufzeichnungsmaterialien sind Trocken- und Naßentwicklungsverfahren bekannt. Dabei sind die Naßentwicklungsverfahren unter Verwendung von Suspensionsentwicklern den Trockenentwicklungsverfahren hinsichtlich Randschärfe und Auflösungsvermögen überlegen.

Suspensionsentwickler bestehen im allgemeinen aus einer hochisolierenden Trägerflüssigkeit, einem Pigment, einer ladungsbestimmenden Substanz (auch Steuerstoff genannt) und einem Polymer. Die Trägerflüssigkeit besitzt vorzugsweise einen Volumenwiderstand von mindestens $10^9$ Ohm.cm und eine Dielektrizitätskonstante unter 3. Als Pigmente werden z. B. übliche Azofarbstoffe, Xanthenfarbstoffe, Phthalocyaninfarbstoffe, wie sie u.a. in der DE-OS 29 44 021 beschrieben werden, aber auch Triphenylmethanfarbstoffe, Acridinfarbstoffe oder Chinolinfarbstoffe verwendet. Als Schwarzpigmente werden vorzugsweise Rußpigmente verwendet.

Die Ladung der Tonerteilchen kann durch öllösliche ionogene Verbindungen z. B. durch Metallsalze von organischen Säuren mit langen aliphatischen Resten erzeugt werden. So können beispielsweise Rußpigmente in flüssigem Isoparafin durch organische Phosphorverbindungen (GB-PS 1 151 141) positiv geladen werden. Ein negativer Ladungsaufbau ist durch Zusatz von basischen Metallalkylsulfonaten möglich (GB-PS 1 571 401). Das Ausmaß der Ladung wird im allgemeinen durch die Konzentration der ladungsbestimmenden Substanz gesteuert.

Das Polymer hat die Aufgabe, der Pigmentdispersion eine ausreichende Stabilisierung zu verleihen und eine Haftung bzw. Fixierung der Pigmentteilchen am Bildträger zu gewährleisten.

Zahlreiche unterschiedlich aufgebaute Polymere können als Komponente von elektrostatographischen Suspensionsentwicklern verwendet werden. So ist die Verwendung von statistischen Copolymerisaten, die aus weniger polaren Monomeren ($C_6$-$C_{20}$-Alkyl(meth)-acrylat) und stärker polaren Monomeren (z. B. Aminomethacrylate, Vinylpyrolidon) aufgebaut sind, vielfach beschrieben worden (DE-OS 19 27 592, DE-OS 19 38 001, BE-PS 784 367, JP-N 49 129 539, JP-N 73 431 54). Die Anwendung von Styrol-Butadien-Copolymerisaten ist ebenso möglich (DE-OS 23 37 419, DE-OS 24 52 499, JP-N 73 290 72).

Auch verschiedenartige Pfropfcopolymerisate sind zum Aufbau von Suspensionsentwicklern verwendet worden (DE-OS 20 42 804, DE-OS 21 03 045, DE-OS 24 21 037, DE-OS 25 32 281, DE-OS 24 32 288, DE-OS 29 35 287, GB-PS 2 157 2343, GB-PS 2 029 049, US-PS 4 033 890).

Die Verwendung von Blockpolymeren zur sterischen Stabilisierung von Dispersionen wird in der GB-PS 1 186 562 sowie in "Advances in Colloid and Interface Science", 4, 193 - 277 (1974) beschrieben. Geeignet sind in erster Linie A-B-Blockpolymere, bei denen der Polymeranteil A im Dispersionsmedium unlöslich ist und eine starke Affinität zur Teilchenoberfläche hat und der Polymeranteil B im Dispersionsmedium gut löslich ist und keine oder nur geringe Affinität zur Teilchenoberfläche hat.

Verwendet man Blockpolymere des Typs A-B, in denen A ein Polystyrolblock und B ein Polybutadienblock ist, so erhält man zwar stabile Dispersionen, die Teilchengrößen sind jedoch unvorteilhaft groß.

Der Erfindung liegt die Aufgabe zugrunde, einen elektrostatographischen Suspensionsentwickler mit hoher Dispersionsstabilität bereitzustellen, der kleine Korngröße und einheitliche Kornverteilung aufweist und frei von Agglomeraten ist.

Die Aufgabe wird erfindungsgemäß mit einem elektrostatographischen Suspensionsentwickler gelöst, der in einer elektrisch isolierenden Trägerflüssigkeit mit einem Volumenwiderstand von mindestens $10^9$ Ohm.cm und einer Dielektrizitätskonstante unter 3 ein dispergiertes Pigment und ein Blockcopolymerisat enthält, wobei das Blockpolymerisat

a) einen Block aus polymerisierten Vinylaromaten und

b) einen Block aus polymerisierten $C_4$-$C_6$-Dienen, dessen Vinyldoppelbindungen ganz oder teilweise mit Alkylmercaptanen, die eine lineare oder verzweigte Alkylgruppe mit 4 bis 20 Kohlenstoffatomen enthalten, umgesetzt sind, enthält.

Geeignete Vinylaromaten sind Styrol und substituierte Styrole, wie zum Beispiel α-Methylstyrol, 4-Methylstyrol und 3-Methylstyrol und Derivate des Naphthalins, wie Vinylnaphthalin oder Isopropenylnaphthalin. Besonders bevorzugt wird Styrol. Als $C_4$-$C_6$-Diene eignen sich Butadien, Isopren, Dimethylbutadien, Ethylbutadien, wobei Butadien bevorzugt wird.

Eine bevorzugte Ausfürungsform ist dadurch gekennzeichnet, daß das Blockcopolymerisat a) einen Polystyrolblock und b) einen Polybutadienblock, dessen Doppelbindungen ganz oder teilweise mit Alkylmercaptanen umgesetzt sind, enthält. In einer besonders bevorzugten Ausführungsform besteht das Blockcopolymerisat aus diesen Blöcken.

Zur Herstellung der erfindungsgemäß verwendeten mit Alkylmercaptanen modifizierten Blockcopolymerisate eignen sich Dien-Vinylaromaten-Blockpolymere, insbesondere Butadien-Styrol-Blockpolymere, die einen Masseanteil an Dien, insbesondere Butadien von 20 bis 80 %, vorzugsweise von 40 bis 80 % und insbesondere 50 bis 75 % enthalten. Der polymerisierte Dien-Block, insbesondere Polybutadienblock enthält dabei 25 bis 95 % Vinyldoppelbindungen, bezogen auf die Gesamtzahl der olefinischen Doppelbindungen. Bevorzugt werden Vinyldoppelbindungsanteile von 40 bis 80 %. Die Molmassen der der Umsetzung mit Alkylmercaptanen zugrundeliegenden Blockpolymeren sollen im Bereich von $10^3$ g/mol bis $5.10^5$ g/mol liegen, wobei Molmassen

2

von $1.10^4$ bis $1.10^5$ bevorzugt werden. Die Herstellung solcher Blockpolymerisate erfolgt vorzugsweise durch anionische Polymerisation mit Hilfe von Alkyllithium-Verbindungen und wird unten beispielhaft beschrieben. Zur Regulierung des Anteils an Vinyldoppelbindungen können die üblichen Donatoren wie Ether oder tertiäre Amine, z. B. Tetrahydrofuran, Glykoldimethylether, Tetramethylethylendiamin verwendet werden.

Gegebenenfalls können neben polymerisierten Dienen und polymerisierten Vinylaromaten im Ausgangs-Blockcopolymerisat auch noch andere polymerisierte Einheiten, vorzugsweise bis maximal 20 % Masseanteil vorliegen. Derartige zusätzliche Einheiten können z. B. durch Polymerisation von folgenden Verbindungen erhalten werden: Acrylnitril, Methacrylnitril, Acrylsäureester und Methacrylsäureester wie z. B. tert.-Butylmethacrylat.

Die Umsetzung der erfindungsgemäßen Blockpolymeren mit Alkymercaptanen wird bevorzugt in Kohlenwasserstofflösung in Gegenwart von Radikalbildnern durchgeführt. Bevorzugte Merkaptane sind solche, die 8 bis 20 Kohlenstoffatome in der Alkylgruppe enthalten, z. B. 2-Ethylhexyl-mercaptan oder n-Dodecylmercaptan.

Als Radikalbildner können Peroxide wie z. B. Dicyclohexylpercarbonat, tert. Butyl-perpivalat, Dilauroylperoxid oder Azoverbindungen wie Azodiisobutyronitril verwendet werden.

Als Lösungsmittel werden Kohlenwasserstoffe wie Butan, Hexan, Heptan oder Isooctan, vorzugsweise aber aromatische oder cycloaliphatische Kohlenwasserstoffe wie Toluol, Cyclohexan oder Methylcyclopentan oder Gemische daraus verwendet.

Die bei dieser Reaktion eingesetzte Menge an Alkylmercaptan wird so bemessen, daß bevorzugt 5 bis 100 % der Vinyldoppelbindungen des Polybutadienblocks umgesetzt werden. Insbesondere werden 10 bis 75 % der Vinyldoppelbindungen umgesetzt.

Zur Herstellung des erfindungsgemäßen Suspensionsentwicklers wird das Blockcopolymerisat bevorzugt in Mengen von 6 bis 100 %, vorzugsweise 10 bis 50 Gew.-%, bezogen auf das Pigment, verwendet.

In einer bevorzugten Ausführungsform werden zur Regulierung der elektrischen Ladung der Tonerteilchen in den erfindungsgemäßen Suspensionsentwicklern Steuerstoffe verwendet. Dies sind z. B. öllösliche ionogene Verbindungen wie etwa Metallsalze langkettiger organischer Säuren. Es können auch Gemische von verschiedenen Steuerstoffen z. B. ein Gemisch von verschiedenen Steuerstoffen mit entgegengesetzten Ladungseffekten verwendet werden, so daß die Stärke der Ladung auf dem Toner oder deren Polarität durch Änderung des Mischungsverhältnisses der beiden Steuerstoffe eingestellt werden kann (GB-PS 1 411 287, 1 411 537 und 1 411 739). Besonders geeignete, positiv arbeitende Steuerstoffe werden in der GB-PS 1 151 141 beschrieben. Diese Steuerstoffe sind zwei- oder dreiwertige Metallsalze einer von Phosphor abgeleiteten, einen organischen Rest enthaltenden Oxysäure, im einzelnen Salze der Metalle Zink, Kupfer, Cadmium, Aluminium oder Eisen von

(a) einem Mono- oder Diester einer von Phosphor abgeleiteten Oxysäure,

(b) einer von Phosphor abgeleiteten Oxysäure, welche eine oder zwei durch ein Kohlenstoffatom an den Phosphor gebundene organische Gruppe enthält, oder

(c) einer von Phosphor abgeleiteten Oxysäure, die eine Estergruppe und eine über ein Kohlenstoffatom an den Phosphor gebundene organische Gruppe enthält, wobei diese organische Gruppe aliphatisch, cycloaliphatisch oder aromatisch ist.

Die organische Gruppe enthält vorzugsweise eine Kette von mindestens 4 Kohlenstoffatomen, insbesondere von 10 bis 18 Kohlenstoffatomen, und sie kann auch durch ein oder mehrere Heteroatome substituiert und/oder unterbrochen sein, z. B. durch Sauerstoff, Schwefel oder Stickstoff.

Besonders gute Ergebnisse werden mit den Zinksalzen erzielt. Es können jedoch auch andere Salze verwendet werden, z. B. Magnesium-, Calcium-, Strontium-, Barium-, Eisen-, Kobalt-, Nickel-, Kupfer-, Cadmium-, Aluminium- und Bleisalze.

Die Löslichkeit der beschriebenen Metallsalze in der elektrisch isolierenden Trägerflüssigkeit kann durch eine oder mehrere organische Gruppen von verzweigter Struktur, z. B. durch verzweigte aliphatische Gruppen, wie eine 2-Butyloctylgruppe, gefördert werden.

Andere geeignete positiv arbeitende Ladungssteuermittel enthalten ein Metallalkylsulfonat, in welchem das Metallion eines der zweiwertigen Metallionen Zink(II), Blei(II), Cadmium(II) oder Kupfer(II) oder ein dreiwertiges Metallion aus der VIII. Gruppe des Periodensystems, z. B. Eisen(III), oder aus der Gruppe VIB, z. B. Chrom(III), ist und worin die Sulfonatgruppe direkt an einer geradkettigen Alkylkette mit mindestens 6 Kohlenstoffatomen vorliegt.

Der Steuerstoff wird entweder dem Konzentrat des Suspensionsentwicklers oder bei der Verdünnung des Entwicklers auf die gewünschte Arbeitskonzentration zugesetzt. Die günstigste Menge läßt sich durch einfache Versuche leicht ermitteln.

Bevorzugt wird Zink-mono(2-butyl)-octylphosphat als Steuerstoff.

Obwohl der erfindungsgemäße Suspensionsentwickler bereits über eine ausreichende Haftfähigkeit verfügt, können für besondere Anwendungen der Suspensionsentwickler, z. B. zur Entwicklung von Ladungsbildern auf elektrophotographischen Bindemittelschichten, dem Entwickler sogenannte Fixiermittel einverleibt werden. Als fixierende Substanzen eignen sich Harze, die mit dem Bindemittel des photoleitfähigen Aufzeichnungsmaterials verträglich sein sollen, z. B. mit dem Bindemittel einer photoleitfähigen Zinkoxidschicht, damit nach der Entwicklung eine gute Haftung des erzeugten Bildes auf der Unterlage erhalten wird. Beispiele für geeignete Harze sind Ester von hydrogeniertem Kolophonium und fettem Öllack ("long-oil"), kolophoniummodifiziertes Phenol-Formaldehydharz, Pentaerythritolester von Kolophonium, Glycerinester von hydrogeniertem Kolophonium, Ethylcellulose, verschiedene Alkydharze, Polyacryl- und Polymethacrylharz, Polystyrol, Polyketonharz und Polyvinylacetat. Spezifische Beispiele solcher Harze sind in der Literatur über elektrostatographische Suspensionsentwickler zu finden, z. B. in der BE-PS 699 157 und in der GB-PS 1 151 141.

Die erfindungsgemäßen Suspensionsentwickler können mit Hilfe üblicher Dispergiermethoden hergestellt werden.

Gute Ergebnisse werden unter Verwendung von Kugelmühlen, Perlmühlen, Kolloidmühlen sowie Hochgeschwindigkeitsrührern erzielt. Es ist zweckmäßig, zunächst ein Tonerkonzentrat aus Trägerflüssigkeit, Pigment und Polymer mit einem Gehalt von 5 bis 50 Gew.-%, vorzugsweise 10 bis 25 Gew.-% Feststoff herzustellen, das durch Zugabe von weiterer Trägerflüssigkeit auf die Gebrauchskonzentrationen von 0,05 bis 2 %, vorzugsweise 0,1 bis 1 % verdünnt wird.

Das erfindungsgemäß verwendete Blockcopolymerisat kann durch eine Vorbehandlung, z. B. durch Aufschmelzen, oder durch Ausfällen aus Lösungen auf das Pigment aufgebracht werden. Es ist jedoch auch möglich, das Blockcopolymerisat der Trägerflüssigkeit zuzusetzen, aus der es durch Adsorption auf das Pigment aufzieht.

Mit den folgenden Beispielen wird die Synthese von mit Alkylmercaptanen modifizierten Blockcopolymerisaten, sowie die Herstellung von erfindungsgemäßen Suspensionsentwicklern im einzelnen erläutert.

**Beispiel 1**

Herstellung eines mit Alkylmercaptan modifizierten Butadien-Styrol-Blockcopolymerisats.

In einem 2-Liter Glasautoklaven werden unter Ausschluß von Wasser und Sauerstoff 1.000 ml Cyclohexan, 5 ml Glykoldimethylether und 50 g Styrol vorgelegt. Die Mischung wird mit einer 1 molaren n-Butyllithiumlösung in n-Hexan vorsichtig bis zur schwachen Gelbfärbung titriert. Dann gibt man 3 ml der 1 molaren Butyllithiumlösung zu. Durch Außenkühlung wird die Polymerisationstemperatur bei 40°C gehalten. Nach einer Reaktionszeit von 60 Minuten gibt man 50 g Butadien zu und polymerisiert bei 50°C für 60 Minuten. Danach ist der Umsatz vollständig. Man gibt 48 ml n-Dodecylmercaptan und 0,5 g Azodiisobutyronitril zu und erwärmt man 5 h auf 80°C.

Nach Abkühlen auf Raumtemperatur wird das Blockcopolymerisat mit 200 ml Ethanol, dem 2 g 2,6-Di-tertiärbutyl-p-methylphenol zugesetzt wurden, aus der Cyclohexanlösung ausgefällt und im Vakuum bis zur Gewichtskonstanz getrocknet. Man erhält 140 g eines farblosen Blockcopolymerisats. [η] = 0,272 dl/g, Toluol, 25°C; 4,5 Gew.-% Schwefel im Polymerisat.

**Beispiel 2**

Herstellung der Pigmentdispersion

In einer Stahlkugelmühle werden 20 Teile Rußpigment, 0,5 bis 5 Teile (2,5-25 Gew.-% bezogen auf das Pigment) des Blockcopolymerisats aus Beipiel 1 und 80 Teile Isododecan 15 Stunden lang gemischt. Die Teilchengrößen wurden mittels Laser-Streulicht-Spektroskopie gemessen. Das verwendete Rußpigment hat folgende charakteristische Daten:

| | |
|---|---|
| Ursprung | Ofenruß |
| Dichte | 1,8 g.cm$^{-3}$ |
| Korngröße vor Eintritt in den Entwickler | 51 nm |
| Ölzahl (Menge Leinöl, ausgedrückt in g, die durch 100 g Pigment adsorbiert wird) | 250 |
| Spezifische Oberfläche | 31 m$^2$/g |
| Flüchtiges Material in Gewichts-% | 2 |
| pH-Wert | 8 |
| Farbe | blauschwarz |

| Probe | Blockcopolymerisat aus Beispiel 1 Gew.-% bzg. auf Pigment | Teilchendurch-messer in nm | K |
|---|---|---|---|
| A | 2,5 | 1.413 | 0,52 |
| B | 5 | 1.250 | 0,44 |
| C | 10 | 326 | 0,26 |

4

| | | | |
|---|---|---|---|
| D | 15 | 299 | 0,20 |
| E | 20 | 317 | 0,06 |
| F | 25 | 369 | 0,06 |

K aus der Tabelle ist gleich der zweite Kumulant geteilt durch das Quadrat des ersten Kumulanten aus der Kumulantenanalyse der Autokorrelationsfunktion des gestreuten Laserlichtes (Koppel, D.E., J. Chem. Phys. 57, 11 (1972) 4814-4820) und ist ein Maß für die Verteilungsbreite der Teilchengrößenverteilung. Je kleiner K ist, umso weniger polydispers ist die Dispersion. Die K-Werte der Proben E und F entsprechen Werten wie sie für nahezu monodisperse Latex-Dispersionen gefunden werden.

Aus der Tabelle ist ersichtlich, daß in diesem Falle mit etwa 10 Gew.-% des verwendeten Blockcopolymerisats, bezogen auf die Pigmentmenge, die für ein zufriedenstellendes Auflösungsvermögen des Entwicklers erforderliche kleine Teilchengröße erreicht ist.

**Beispiel 3**

Den Proben C und E aus dem Beispiel 2 werden 0.5 bis 1 Gew.-% Zink-mono(2-butyl)-octylphosphat (ZOP), bezogen auf das Pigment, als ladungsbestimmende Substanz zugesetzt. Nach Verdünnen der Dispersionen auf 1 Gew.-% Pigment mit Isododecan werden mit Hilfe der Methode von Kohler (Photographic Science and Engineering 22, 4 (1978) 218-227) die relevanten Daten für die elektrophoretische Entwicklung bestimmt.

| Vers.Nr. | ZOP (Gew.-%) | $X_E$ (Ohm$^{-1}$m$^{-1}$) | $X_M$ (Ohm$^{-1}$m$^{-1}$) | $\mu$ (m$^2$V$^{-1}$S$^{-1}$) | q/m (As kg$^{-1}$) |
|---|---|---|---|---|---|
| C | - | $3.3 \cdot 10^{-11}$ | | | |
| C | 0,5 | $6.5 \cdot 10^{-9}$ | $4.4 \cdot 10^{-9}$ | $2.9 \cdot 10^{-8}$ | $+7 \cdot 10^{-3}$ |
| C | 1,0 | $1,3 \cdot 10^{-8}$ | $1.1 \cdot 10^{-8}$ | $4.7 \cdot 10^{-8}$ | $+5 \cdot 10^{-3}$ |
| E | - | $1,0 \cdot 10^{-10}$ | | | |
| E | 0.5 | $6,2 \cdot 10^{-9}$ | $4.0 \cdot 10^{-9}$ | $2.9 \cdot 10^{-8}$ | $+7 \cdot 10^{-3}$ |

$X_E$ ist die Leitfähigkeit des gesamten Entwicklers, $X_M$ ist die Leitfähigkeit der flüssigen Phase des Entwicklers nach Abtrennung der Pigmentteilchen durch Zentrifugieren. $\mu$ ist die elektrophoretische Beweglichkeit der Pigmentteilchen und q/m die Ladung pro Gewichtseinheit der Tonerteilchen. Ohne Zugabe der ladungsbestimmenden Substanz zu dem Entwickler sind die Werte für $\mu$ und q/m so klein, daß sie nicht ermittelt werden können. Nach Zugabe des ZOP's sind die Teilchen eindeutig positiv aufgeladen ($+q/m$) und lassen sich einwandfrei auf einer negativ aufgeladenen Polyesterfolie abscheiden.

**Beispiel 4**

Herstellung eines modifizierten Styrol-Butadien-Blockcopolymerisats.
Es wird gemäß Beispiel 1 verfahren mit dem Unterschied, daß man nach dem Austitrieren anstelle von 3 ml 5 ml einer 1-molaren n-Butyllithiumlösung in n-Hexan zusetzt.

**Beispiel 5**

Herstellung eines modifizierten Styrol-Butadien-Blockpolymerisats.
Es wird gemäß Beispiel 1 verfahren mit dem Unterschied, daß zur Modifizierung des Blockpolymeren 63 ml n-Dodecylmercaptan verwendet werden.

**Beispiel 6**

Herstellung einer Pigmentdispersion
1 g des gemäß Beispiel 4 hergestellten Blockcopolymerisats wird in 50 ml Isododekan gelöst. Diese Lösung wird zusammen mit 4 g Rußpigment 15 Stunden lang in einer Kugelmühle gemahlen.
Eine feine, stabile Pigmentdispersion wird erhalten, wobei der Korndurchmesser der dispergierten Teilchen ca. 230 nm beträgt. Durch Zusatz von 1 Gew.-% ZOP, bezogen auf die Pigmentmenge, erhält man einen positiv geladenen Suspensionsentwickler mit hohem Auflösungsvermögen und hervorragender Dispersionsstabilität.

5

**Beispiel 7**

Herstellung einer Pigmentdispersion

Mit dem gemäß Beispiel 5 hergestellten Blockcopolymerisats wird auf analoge Weise wie im Beispiel 5 eine Dispersion von Rußpigment in Isododekan hergestellt.

Es wird eine sehr feine, stabile Pigmentdispersion erhalten. Der Korndurchmesser beträgt ungefähr 120 nm. Der durchschnittliche Durchmesser der Tonerteilchen wurde mit einem Laser-Streulicht-Spektrometer ermittelt.

Die in diesem Gerät angewandten Meßgrundsätze sind die der Brownschen Bewegung und der Autokorrelationsspektroskopie von gestreutem Laserlicht. Die Frequenz dieser Brownschen Bewegung steht in umgekehrter Beziehung zur Teilchengröße.

Der durch Zusatz von 1 Gew.-% ZOP, bezogen auf die Pigmentmenge, hergestellte Suspensionsentwickler genügt bezüglich seines Auflösungsvermögens und seiner Disperiunsstabilität vollauf den für eine Anwendung in Kopierautomaten zu stellenden Forderungen.

**Beispiel 8** Vergleichsbeispiel

Herstellung einer Pigmentdispersion mit <u>nicht</u> mit Alkylmercaptan modifiziertem Styrol-Butadien-Blockpolymeren des aus der GB-PS 1 186 562 bekannten Typs.

1 g Blockpolymeres aus gleichen Gewichtsteilen Styrol und Butadien mit einer Molmasse von 1,6 $10^4$, wird mit 4 g Rußpigment und 50 ml Isododecan 15 Stunden lang in einer Kugelmühle gemahlen. Man erhält eine grobteilige Dispersion (Teilchengröße > 1 μm).

1 g Blockpolymeres aus 38 Gewichtsteilen Styrol und 62 Gewichtsteilen Butadien mit einer Molmasse von 1,3 · $10^4$ wird in 50 ml Isododecan gelöst. Diese Lösung wird zusammen mit 4 g Rußpigment 15 Stunden lang gemahlen. Es wird eine Pigmentdispersion erhalten, wobei der mittlere Korndurchmesser der dispergierten Teilchen 910 nm beträgt.

Die nach Zusatz von 1 Gew.-% ZOP, bezogen auf die Pigmentmenge, erhaltenen Suspensionsentwickler zeigen eine starke Sedimentationstendenz und liefern zugleich mäßig getönte Bilder mit unzureichender Auflösung.

**Patentansprüche**

1. Elektrostatographischer Suspensionsentwickler, der in einer elektrisch isolierenden Trägerflüssigkeit mit einem Volumenwiderstand von mindestens $10^9$ Ohm.cm und einer Dielektrizitätskonstante unter 3 ein dispergiertes Pigment und ein Blockcopolymerisat enthält, dadurch gekennzeichnet, daß das Blockcopolymerisat enthält:

a) einen Block aus polymerisierten Vinylaromaten und

b) einen Block aus polymerisierten $C_4$-$C_6$-Dienen, dessen Vinyldoppelbindungen ganz oder teilweise mit Alkylmercaptanen, die eine lineare oder verzweigte Alkylgruppe mit 4 bis 20 C-Atomen enthalten, umgesetzt sind.

2. Suspensionsentwickler nach Anspruch 1, dadurch gekennzeichnet, daß das Blockcopolymerisat

a) einen Polystyrolblock und

b) einen Polybutadienblock enthält.

3. Suspensionsentwickler nach Anspruch 1, dadurch gekennzeichnet, daß der Masseanteil des der Umsetzung mit Alkylmercaptanen zugrundeliegenden Blockcopolymerisats an Dien 20 bis 80 % beträgt, der Polydienblock 25 bis 95 % Vinyldoppelbindungen enthält und die Molmasse des der Umsetzung mit Alkylmercaptanen zugrundeliegenden Blockcopolymerisats $10^3$ bis $5.10^5$ g/mol ist.

4. Suspensionsentwickler nach Anspruch 1, dadurch gekennzeichnet, daß 5 bis 100 % der Vinyldoppelbindungen des Polydienblocks mit Alkylmercaptanen umgesetzt sind.

5. Suspensionsentwickler nach Anspruch 1, dadurch gekennzeichnet, daß die Alkylmercaptane eine lineare oder verzweigte Alkylgruppe mit 8 bis 20 Kohlenstoffatomen enthalten.

6. Suspensionsentwickler nach Anspruch 1, dadurch gekennzeichnet, daß er 6 bis 100 Gew.-%, bezogen auf die Menge des Pigments, an Blockcopolymerisat enthält.

7. Suspensionsentwickler nach Anspruch 1, dadurch gekennzeichnet, daß er eine ladungsbestimmende Substanz enthält.

8. Suspensionsentwickler nach Anspruch 7, dadurch gekennzeichnet, daß er als ladungsbestimmende Substanz Zink mono(2-butyl)-octylphosphat enthält.

## Claims

1. Electrostatographic suspension developer which contains, in an electrically insulating carrier liquid with a volumeric resistance of at least $10^9$ Ohm.cm and a dielectric constant below 3, a dispersed pigment and a block copolymer, characterised in that the block copolymer contains:
   a) a block of polymerised vinyl aromatic compounds and
   b) a block of polymerised $C_4$-$C_6$ dienes, the vinyl double bonds of which are completely or partially reacted with alkyl mercaptans which contain a linear or branched alkyl group with 4 to 20 C atoms.

2. Suspension developer according to Claim 1, characterised in that the block copolymer contains
   a) a polystyrene block and
   b) a polybutadiene block.

3. Suspension developer according to Claim 1, characterised in that the weight proportion of diene in the block copolymer forming the basis of the reaction with alkyl mercaptans is 20 to 80 %, the polydiene block contains 25 to 95 % of vinyl double bonds and the molecular weight of the block copolymer forming the basis of the reaction with alkyl mercaptans is $10^3$ to $5.10^5$ g/mol.

4. Suspension developer according to Claim 1, characterised in that 5 to 100 % of the vinyl double bonds of the polydiene block are reacted with alkyl mercaptans.

5. Suspension developer according to Claim 1, characterised in that the alkyl mercaptans contain a linear or branched alkyl group with 8 to 20 carbon atoms.

6. Suspension developer according to Claim 1, characterised in that it contains 6 to 100 % by weight, based on the quantity of the pigment, of block copolymer.

7. Suspension developer according to Claim 1, characterised in that it contains a charge-determining substance.

8. Suspension developer according to Claim 7, characterised in that it contains zinc-mono (2-butyl)-octyl phosphate as the charge-determining substance.

## Revendications

1. Révélateur électrostatographique en suspension qui contient dans un liquide véhicule isolant de l'électricite, ayant une résistance en volume d'au moins $10^9$ ohm.cm et une constante diélectrique inférieure à 3, un pigment en dispersion et un copolymère séquencé, caractérisé en ce que le copolymère séquencé contient:
   a) un bloc de monomeres vinylaromatiques polymérisés, et
   b) un bloc de diènes en $C_4$-$C_6$ polymérisés, dont les doubles liaisons vinyliques ont réagi en totalité ou en partie avec des alkylmercaptans contenant un groupe alkyle linéaire ou ramifié en $C_4$-$C_{20}$.

2. Révélateur en suspension selon la revendication 1, caractérisé en ce que le copolymère séquencé contient:
   a) un bloc de polystyrène, et
   b) un bloc de polybutadiène.

3. Révélateur en suspension selon la revendication 1, caractérisé en ce que la proportion en poids de diène dans le copolymère séquencé qui a réagi avec les alkylmercaptans est de 20 à 80 %, le bloc de polydiène contient de 25 à 95 % de doubles liaisons vinvliques et la masse moléculaire du copolymère séquencé qu'on a fait réagir avec des alkylmercaptans est de $10^3$ à $5.10^5$ g/mole.

4. Révélateur en suspension selon la revendication 1, caractérisé en ce que 5 à 100 % des doubles liaisons vinyliques du bloc de polydiène ont réagi avec des alkylmercaptans.

5. Révélateur en suspension selon la revendication 1 caractérisé en ce que les alkylmercaptans contiennent un groupe alkyle linéaire ou ramifié en $C_8$-$C_{20}$.

6. Révélateur en suspension selon la revendication 1, caractérisé en ce qu'il contient de 6 à 100 % en poids de copolymère séquencé par rapport à la quantité de pigment.

7. Révélateur en suspension selon la revendication 1, caractérisé en ce qu'il contient une substance déterminant la charge.

8. Révélateur en suspension selon la revendication 7, caractérisé en ce qu'il contient en tant que substance déterminant la charge du mono-(2-butyl)-octylphosphate de zinc.